# EUROPEAN PATENT SPECIFICATION

(11) **EP 1 867 235 B1**
(45) Date of publication and mention of the grant of the patent: **01.08.2012**
(21) Application number: 07109679.6
(22) Date of filing: 06.06.2007
(51) Int. Cl.: A23F 5/04, A23N 12/08

(54) **Method for roasting coffee**
Verfahren zum Rösten von Kaffee
Procédé de torréfaction du café

(30) Priority: 15.06.2006 IT MO20060187
(43) Date of publication of application: 19.12.2007
(73) Proprietor: ILLYCAFFE' S.p.A., I-34147 Trieste (IT)
(72) Inventor: Suggi Liverani, Furio, 34100 Trieste (IT); Bonnlaender, Bernd, 90571 Schwaig (DE); Rivetti, Diego, 34123 Trieste (IT)
(74) Representative: Crugnola, Pietro

(56) References cited:
- EP-A1- 0 732 880
- EP-A1- 0 755 631
- EP-A2- 0 234 712
- WO-A2-2007/082857
- JP-A- 60 110 247
- JP-A- 2005 006 592
- US-A- 3 634 094
- US-A- 3 715 215
- US-A- 4 540 591
- DATABASE WPI Week 200522 Derwent Publications Ltd., London, GB; AN 2005-205842 XP002450480 & JP 2005 058061 A (UCC UESHIMA KOHI KK) 10 March 2005 (2005-03-10)

## Description

The invention relates to an improved method for roasting coffee, in particular a roasting method for improving the characteristic aroma and taste of roasted coffee, which is usable with conventional roasting machines that use contact, radiation or convection.

Improving the quality of coffee has always been an objective of the roasting industry, in particular when low-quality coffee is roasted, such as, for example, Robusta-quality coffee.

From the prior art improving the quality of coffee during the roasting process is known, by subjecting the coffee to treatment under pressure with saturated steam, as disclosed, for example, in US patent US 4,540,591. This pressure treatment is applied to roasting Robusta-type coffee beans and entails a more complex roasting process and greater cost of the corresponding equipment.

EP 732880 discloses a process for roasting green coffee beans, to improve the flavour and the fragrance of the coffee, which comprises a first roasting step in which the green coffee beans are roasted with steam at a temperature between 251 °C and 400 °C, for a time comprised between 50 and 300 seconds, at a pressure comprised between 6.5 and 20 bar, and a final roasting step in which the coffee beans are roasted with steam at a temperature between 251 °C and 400 °C, for a time comprised between 60 and 800 seconds, at substantially atmospheric pressure.

EP 755631 discloses a process for improving the quality of green coffee through treatment with steam and water at a high temperature and high pressure in a pressurised receptacle, with reduction of the excitant substances such as pyrocatechol, pyrogallol and hydroquinone present in roasted coffee. The process provides the following steps:
- initially increasing the water content in the coffee beans to 22-28%,
- softening the beans by subjecting them for 10-30 minutes to steam action at 1.3-1.5 bar pressure and with the addition of water;
- stabilising the temperature at approximately 95 °C;
- subsequently heating the beans to a temperature of approximately 130-150°C for 5-20 minutes, in such a way as to evaporate the humidity present in the beans;
- decreasing the pressure in the receptacle under pressure by 0.5-1 bar to 0.8-1.4 bar continuously extracting steam, whilst fresh steam is simultaneously introduced; pressure is then maintained for 130-180 minutes;
- lastly, letting the steam escape from the receptacle under pressure and evaporating and removing the excess humidity of the coffee beans by means of a vacuum pump until the original humidity content of 10-12% is reached.

US 4,938,978 discloses a process for treating the green coffee in which the humidity content of the green coffee beans is increased to approximately 25%-30% in weight and the beans that are thus humidified are roasted in an inert gas atmosphere in a receptacle under pressure and are then dried. The process has the object of providing a coffee that enables better yield in the extraction of the aromatic substances contained therein to be obtained in the preparation of a beverage with soluble coffee.

The processes disclosed in EP 732880 and EP 755631 and US 4,938,978 require the use of pressurised equipment, which considerably increases the cost of the equipment and does not enable conventional roasting equipment to be used.

US patent 3,715,215 discloses a process for removing gases and undesired aromatic substances from the coffee during roasting.

The process provides the following steps:
- loading the green coffee into a roasting apparatus;
- heating the green coffee to about 270 °F (approximately 132 °C) or more to roast the coffee partially;
- adding water to cool rapidly the partially roasted coffee by such an amount as to increase the humidity content of the beans between approximately 3% and approximately 40% in weight;
- heating the partially roasted and cooled coffee to complete roasting;
- cooling the roasted coffee.

After adding water an optional step is provided in which heating of the coffee beans is suspended for a short interval of time of approximately five minutes, to enable the humidity inside the coffee beans to be balanced.

In the process disclosed in US 3,715,215 adding water to the partially roasted coffee beans at a temperature above the boiling point of water causes the water to be immediately evaporated that comes into contact with the beans until the temperature of the latter has descended below boiling point, which noticeably slows penetration of the water inside the beans so that the efficiency of elimination of the undesired aromatic substances is reduced. Also providing a short balancing step for balancing the humidity in the coffee beans is not sufficient to ensure complete penetration of the water inside the bean as the balancing time provided is too short.

JP 60110247 discloses a method and an apparatus for obtaining roasted coffee beans. Impurities are removed from the raw coffee beans by a wind and vibratory sieve and then coffee beans are treated with warm or hot water to remove harmful components. The coffee beans are then adjusted to a given temperature and humidity, e.g. 50-60°C and 15-20%, to promote the chemical change of the coffee components. The adjusted coffee beans are roasted with a heat source, e.g. far infrared rays, provided above the beans. Harmful components, e.g. smoke, generated in the roasting are removed by combustion.

US 3,634,094 discloses a method for treating botanically dissimilar coffees, which are separately and differently pretreated to contain unequal quantities of water, and thereafter blended and conventionally roasted to achieve flavours comparable to those resulting,from blending the same non-pretreated botanically dissimilar coffees after separately roasting each type. The object of the present invention is to provide a coffee-roasting process that can also be achieved in conventional roasting apparatuses and which enables aromatic compounds to be reduced that have a negative effect on the aroma of the coffee and the aromatic features of the roasted coffee to be improved, said process being applicable, in particular, to high-quality coffee, for example an Arabica-quality coffee, in order to improve the quality of unwashed Arabica coffee that is unwashed, washed or subjected to intermediate processes, for example semi-washed, and defects to be removed, for example a wood taste.

A further object of the present invention is to provide an apparatus for roasting coffee in which the method of the present invention is implementable.

According to a first aspect of the present invention there is provided a process for roasting coffee as defined in claim 1.

Coffee beans can be humidified by mixing hot water with the coffee beans inside the roasting apparatus, or in an external apparatus, to then transfer the humidified beans to the roasting apparatus.

Humidification causes the volume of the coffee beans to increase to approximately twice the volume of the beans before humidification.

Alternatively, the coffee beans can be humidified inside the roasting apparatus by jets of water, also in nebulized form.

The step of humidifying the coffee beans lasts sufficiently long to enable the humidity to penetrate and be distributed inside the beans in a balanced manner.

According to a further aspect of the present invention there is provided an apparatus for roasting coffee beans as defined in claim 8.

The process and the apparatus according to the invention have the advantage of making balanced and complete humidification of the coffee beans possible, which enables removing undesired aromatic substances to be optimised and positive aromatic features to be improved.

Further, roasting at atmospheric pressure instead of in a receptacle under pressure enables the method according to the invention to be achieved using conventional roasting devices without pressurisation but with humidified beans and/or a modified atmosphere to reduce the negative compounds (having an unpleasant taste) and to increase given positive features in the aroma of the roasted coffee. The coffee beans are in fact humidified in such a way that the contents of substances such as t-2-nonenal are considerably reduced, which gives the Arabica coffee a wood taste, guaiacol and ethylguaiacol, which give the coffee a smoky flavour, whilst the percentage of substances is increased that give the coffee pleasant aromas such as, for example, linalol and phenylethanol. Further, roasting at atmospheric pressure makes sure that volatile substances that develop from the beans during roasting can be immediately removed due to the diffusion from the centre to the surface of the beans, which is an effect that does not occur, or which occurs in a reduced manner, if roasting is performed in a receptacle under pressure. This makes it possible to optimise the reduction of the negative aromatic compounds present in the coffee before roasting.

Variations in the aromatic substances contained in raw coffee during roasting have been discussed in detail, for example, by W. Holscher in "Kaffee - die Zukunft" J.B. Rothfos, Behrs Verlag 2005, page 88 and following pages, to which reference is made.

The roasting process according to the invention can be made using various appliances, some of which are illustrated in a very schematic manner in the attached drawing, in which:

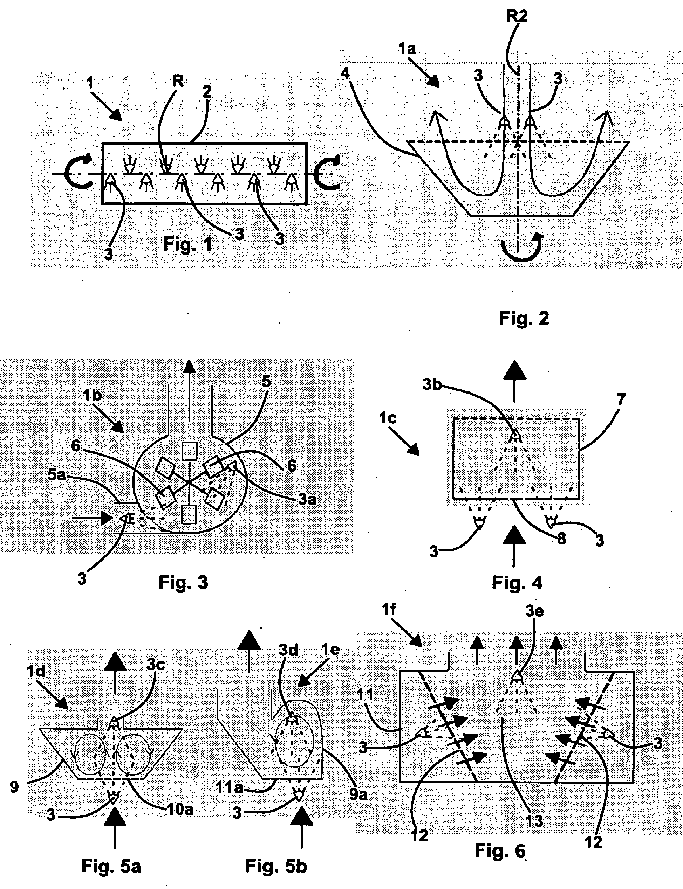

Figure 1 illustrates a roasting apparatus 1 comprising a rotating cylinder 2 with a vertical or horizontal axis, with or without perforated walls in which the coffee can be roasted by a flow of hot gases, at a temperature of 450-550 °C, or by heating the walls of the cylinder from the outside, the roasting time being in general comprised between 8.5 min and 20 min. Inside the rotating cylinder 2 there is arranged a plurality of humidifying means 3, arranged aligned substantially along the rotation axis R of the cylinder 2 or along the wall of the cylinder 2. The humidifying means 3, which is used for humidifying, before roasting, the coffee introduced into the cylinder 2 are nozzles that are suitable for dispensing jets of water onto the coffee beans, or diffusers suitable for dispensing currents of humid air onto the coffee beans. Figure 2 illustrates a roasting apparatus 1a comprising a receptacle 4 rotating around a substantially vertical axis R2 in which the coffee is heated by a flow of hot gases to a temperature of 480-550 °C, the roasting time being generally comprised between 3 minutes and 6 minutes With the receptacle 4 there is associated humidifying means 3, for example, water dispensing nozzles or diffusers of humid air, for humidifying, before roasting, the coffee introduced into the receptacle 4. The nozzles, or diffusers, 3 are arranged so as to generate jets of water, or currents of humid air, substantially in the direction of the flow of hot gases into the inlet of the receptacle, i.e. in the direction that is substantially parallel to the rotation axis R2.
Figure 3 illustrates a roasting apparatus 1b comprising a fixed cylinder 5, inside which the coffee is roasted by a flow of hot gases to a temperature of 400-450 °C, roasting time being generally comprised between 3 minutes and 6 minutes. Inside the cylinder 5 there are arranged rotating blades 6 for remixing, after roasting, the coffee contained in the receptacle. At an inlet 5a of the receptacle 5, through which the aforesaid flow of hot gases is delivered, there is arranged humidifying means 3, in the form of nozzles or diffusers, which sends jets of water, or currents of humidified air, inside the receptacle 5, through the inlet 5a, before the flow of hot gases is delivered into the receptacle 5 for humidifying the coffee beans before roasting. Alternatively or in addition to humidifying means 3, further humidifying means 3a, which is also in the form of nozzles or diffusers, can be arranged inside the receptacle 5.
Figure 4 illustrates a fluid bed roasting apparatus 1c, comprising a receptacle 7 in which the coffee is roasted by heating with a flow of hot gases to a temperature of 240-270 °C, for a roasting time of approximately 5 minutes. The flow of hot gases is delivered into the receptacle 7 through a bottom 8 provided with passages for the flow of hot gases. Before being heated with said flow of hot gases, the coffee is humidified with jets of water or currents of humidified air, delivered through the bottom 8, by at least a nozzle, or diffuser 3. Alternatively or in addition to the nozzle, or diffuser 3, further humidifying means 3b, also comprising at least a nozzle, or a diffuser, can be arranged inside the receptacle 7.
Figures 5a and 5b illustrate fluid-bed roasting apparatuses 1d and 1e of the so-called "spouted bed" type, that are symmetrical (Fig. 5a) and asymmetrical (Fig. 5b). The apparatuses 1d and 1e each comprise a receptacle 9, 9a, respectively, in which the coffee is roasted, by heating it with a flow of hot gases, to a temperature of 310-360 °C for 1.5-6 min (rapid roasting), or to a temperature of 230-275 °C for 10-20 min (slow roasting). The flow of hot gases is delivered into the receptacle 9, 9a through a corresponding bottom 10a, 11a provided with passages for the flow of hot gases. Before being heated with said flow of hot gases, the coffee is humidified by jets of water, or currents of humidified air, delivered through the bottom 10a, 11a by at least a nozzle, or diffuser, 3, and/or delivered directly inside the receptacle 9, 9a, by at least a further nozzle or diffuser 3c, 3d.
Figure 6 illustrates an apparatus 1f with a rotating bed in which the coffee is roasted to a temperature of approximately 280 °C, for 1.5-3 min. The apparatus 1f comprises a receptacle 11, inside which there is defined, by walls 12, a roasting zone 13 into which the coffee to be roasted is delivered. The walls 12 are provided with passages through which flows of hot gases are delivered into the roasting zone 13 to roast the coffee to the aforesaid temperature. Before being heated by said flows of hot gases, the coffee is humidified by jets of nebulized water, humidified currents of air that are sent by nozzles, or diffusers, 3 through said passages of the walls 12, and/or sent by nozzles, or diffusers 3e arranged in said roasting zone.

Below, there are shown three examples of roasting coffee with the method according to the invention, the results of which are compared with the results of the roasting of the coffee according to traditional methods.

### Example 1:

450 g of unwashed Arabica coffee, or Brazilian origin, "old crop" flavour, with an initial humidity content of approximately 10 %, were humidified with 90g of water at a temperature of 90°C for 30 minutes and were subsequently roasted and ground.

An equal quantity of the same coffee was roasted without the aforesaid humidification treatment in order to obtain the same colour for the ground coffee as that obtained for the coffee subjected to humidification treatment, the colour being analysed by a spectrophotometer.

In Table 1 that follows, the values in mg/100g of the positive and negative compounds are compared that influence the taste and the aroma of the coffee of the two samples of roasted coffee after respectively roasting according to a traditional method and according to the method of the present invention:

**Table 1:**

| Compound (mg/100g) | Traditional roasting | Roasting using the method according to the invention |
|---|---|---|
| Linalol | 19.0 (±3.8) | 29.9 (±1.9) |
| Phenylethanol | 26.5 (±3.8) | 37.8 (±1.6) |
| t-2-nonenal | 32.1 (±1.3) | 14.5 (±1.0) |
| 2.4-decadienal | 7.0 (±1.5) | 3.7 (±0.6) |
| Beta-damascenone | 26.4 (±4.0) | 26.9 (±1.5) |

From the table it can be seen that in the coffee roasted according to the method of the present invention there is an increase in positive aromatic compounds such as linalol and phenylethanol and a reduction in negative aromatic compounds, such as aldehydes, in particular t-2-nonenal.

The aforesaid results were confirmed by tasting tests conducted by expert tasters.

### Example 2:

450 g of unwashed Arabica coffee or Indian origin, "old crop" flavour, with an initial humidity content of approximately 10%, were humidified with 90g of water at a temperature of 90°C for 30 minutes and were subsequently roasted and ground. An equal quantity of the same coffee was roasted without the aforesaid humidification treatment in order to obtain the same colour for the ground coffee as that obtained for the coffee subjected to humidification treatment, the colour being analysed by a spectrophotometer.

In Table 2 that follows, the values in mg/100g of the positive and negative compounds are compared that influence the taste and the aroma of the coffee of the two samples of roasted coffee after respectively roasting according to a traditional method and according to the method of the present invention:

**Table 2:**

| Compound (mg/100g) | Traditional roasting | Roasting using the method according to the invention |
|---|---|---|
| Linalol | 33.4 (±2.1) | 44.7 (±1.5) |
| Phenylethanol | 27.3 (±1.1) | 34.9 (±4.9) |
| t-2-nonenal | 18.6 (±1.2) | 12.7 (±0.6) |
| 2,4-decadienal | 6.3 (±0.6) | 4.9 (±0.5) |
| Beta-damascenone | 4.8 (±0.2) | 5.2 (±1.0) |

From the table it can be seen that in the coffee roasted according to the method of the present invention there is an increase in positive aromatic compounds such as linalol and phenylethanol and a reduction in negative aromatic compounds, such as aldehydes, in particular t-2-nonenal; lastly, there was no significant increase in beta-damascenone.

### Example 3:

8 kg of unwashed Arabica coffee, Brazilian origin, smoky flavour, were humidified with 800g of water at a temperature of 70°C for 60 minutes and subsequently roasted and ground.
An equal quantity of the same coffee was roasted without the aforesaid humidification treatment in order to obtain the same colour for the ground coffee as that obtained for the coffee subjected to humidification treatment, the colour being analysed by a spectrophotometer.
In Table 3 that follows, the values in mg/100g of the positive and negative compounds are compared that influence the taste and the aroma of the coffee of the two samples of roasted coffee after respectively roasting according to a traditional method and according to the method of the present invention:

**Table 3:**

| Compound (mg/100g) | Traditional roasting | Roasting using the method according to the invention |
|---|---|---|
| Linalol | 23.5 (±2.8) | 29.4 (±2.1) |
| Phenylethanol | 24.5 (±3.8) | 27.8 (±1.8) |
| Ethylguaiacol | 210.1 (±10.3) | 130.3 (±11.0) |

From the table it can be seen that in the roasted coffee according to the method of the present invention there is an increase in positive aromatic compounds, such as linalol and phenylethanol and a reduction in negative aromatic compounds, such as ethylguaiacol.

In the practical embodiment, the constructional details may be different from those indicated but be technically equivalent thereto, without thereby leaving the protective scope of the present invention.

## Claims

1. Process for roasting coffee, comprising humidifying coffee beans to be roasted until a humidity percentage in said beans is reached that is comprised between 20% and 40% in weight, said humidifying occurring at a lower temperature than the boiling point of water and at atmospheric pressure, and roasting said humidified coffee beans at atmospheric pressure, ***characterised in that*** said humidifying and said roasting are carried out in a same receptacle (7; 9; 9a) of a roasting apparatus (1c; 1d; 1e).

2. Process according to claim 1, wherein said humidifying occurs at a temperature preferably comprised between 60° C and 90°C.

3. Process according to claim 1, or 2, wherein said humidifying is protracted for a time preferably comprised between 30 and 60 minutes.

4. Process according to any preceding claim, wherein said humidifying comprises mixing said coffee beans with water.

5. Process according to any preceding claim, wherein said humidifying comprises subjecting said coffee beans to jets of water.

6. Process according to any one of claims 1 to 3, wherein said humidifying comprises subjecting said coffee beans to currents of humid air.

7. Process according to any preceding claim, wherein said humidifying causes an increase up to approximately 100% in the volume of said beans.

8. Apparatus (1c; 1d; 1e) for roasting coffee beans, comprising a receptacle (7; 9; 9a) intended for receiving said coffee beans, heating means for heating said coffee beans up to a roasting temperature and maintaining said roasting temperature for a preset time, humidifying means (3) for humidifying said coffee beans, ***characterised in that*** said receptacle (7; 9; 9a) is provided with a bottom (8; 10a; 11a) provided with passages suitable for enabling a fluid to pass from the exterior to the interior of said receptacle (7; 9; 9a), said humidifying means (3) comprises at least one nozzle or diffuser (3) suitable for generating a jet of water or a flow of humid air directed toward the inside of said receptacle (7; 9; 9a), said jet of water or said flow of humid air are delivered through said bottom (8; 10a; 11a), said heating means is arranged for producing a flow of hot gases and delivering said hot gases through said passages, at least a further nozzle or diffuser (3b, 3c, 3d) suitable for generating a jet of water or a flow of humid air can be arranged inside said receptacle (7; 9; 9a) in addition or alternatively to said at least one nozzle or diffuser (3), and said apparatus is selected from a group consisting of: fluid bed apparatus (1c), symmetrical spouted bed" type fluid bed apparatus (1d), asymmetrical "sprouted bed" type fluid bed apparatus (1e).

## Patentansprüche

1. Verfahren zum Rösten von Kaffee, das Folgendes aufweist, nämlich Anfeuchten der zu röstenden Kaffeebohnen, bis ein Feuchtiglceitsprozentsatz in den Bohnen erreicht wird, der zwischen 20 und 40 Gew.-% liegt, wobei das Anfeuchten bei einer Temperatur, die niedriger ist als der Siedepunkt von Wasser und bei Atmosphärendruck, erfolgt, und Rösten der angefeuchteten Kaffeebohnen bei Atmosphärendruck, **dadurch gekennzeichnet, dass** das Anfeuchten und das Rösten in einem gleichen Behältnis (7; 9; 9a) einer Röstvorrichtung (1c; 1d; 1e) durchgeführt wird.

2. Verfahren nach Anspruch 1, wobei das Anfeuchten bei einer Temperatur erfolgt, die vorzugsweise zwischen 60 und 90°C liegt.

3. Verfahren nach Anspruch 1 oder 2, wobei sich das Anfeuchten über eine Zeit erstreckt, die vorzugsweise zwischen 30 und 60 Minuten liegt.

4. Verfahren nach einem der vorhergehenden Ansprüche, wobei das Anfeuchten das Vermischen der Kaffeebohnen mit Wasser aufweist.

5. Verfahren nach einem der vorhergehenden Ansprüche, wobei das Anfeuchten das Aussetzen der Kaffeebohnen an Wasserstrahlen aufweist.

6. Verfahren nach einem der Ansprüche 1 bis 3, wobei das Anfeuchten das Aussetzen der Kaffeebohnen an Strömungen feuchter Luft aufweist.

7. Verfahren nach einem der vorhergehenden Ansprüche, wobei das Anfeuchten ein Anstieg im Volumen der Bohnen von bis zu etwa 100 % auslöst.

8. Vorrichtung (1c; 1d; 1e) zum Rösten von Kaffeebohnen, die Folgendes aufweist, nämlich ein Behältnis (7; 9; 9a), das zur Aufnahme der Kaffeebohnen vorgesehen ist, Wärmemittel zum Erwärmen der Kaffeebohnen bis zu einer Rösttemperatur und zum Beibehalten der Rösttemperatur für eine vorgegebene Zeit, Anfeuchtungsmittei (3) zum Anfeuchten der Kaffeebohnen, **dadurch gekennzeichnet, dass** das Behältnis (7; 9; 9a) mit einem Boden (8; 10a; 11a) ausgestattet ist, der mit Durchgängen ausgestattet ist, die dazu geeignet sind, es einem Fluid zu ermöglichen, von der Außenseite des Behältnisses (7; 9; 9a) zur Innenseite des Behältnisses (7; 9; 9a) hindurchzutreten, wobei die Anfeuchtungsmittel (3) zumindest eine Düse oder zumindest einen Diffuser (3) aufweisen, der dazu geeignet ist, einen Wasserstrahl oder einen Strom feuchter Luft zu erzeugen, der auf die Innenseite des Behältnisses (7; 9; 9a) gerichtet ist, wobei der Wasserstrahl oder der Strom feuchter Luft durch den Boden (8; 10a; 11a) zugeführt werden, wobei die Wärnemittel angeordnet sind, einen Strom heißere Gase zu erzeugen und diese heißen Gase durch die Durchgänge zuzuführen, wobei zumindest eine weitere Düse oder ein weiterer Diffusor (3b, 3c, 3d), der dazu geeignet ist, einen Wasserstrahl oder einen Strom feuchter Luft zu erzeugen zusätzlich oder als Alternative zu der der zumindest einen Düse oder dem zumindest einen Diffusor (3), innerhalb des Behältnisses (7; 9; 9a) angeordnet sein kann, und wobei die Vorrichtung ausgewählt ist aus der Gruppe bestehend aus den Fließbettvorrichtungen (1c), den Fließbettvorrichtungen vom symmetrischen Sprudelbetttyp (1d) und den Fließbettvorrichtungen vom asymmetrischen Sprudelbetttyp (1e).

## Revendications

1. Procédé de torréfaction du café comprenant l'humidification des grains de café à torréfier jusqu'à ce qu'un taux d'humidité dans lesdits grains soit atteint, qui soit compris entre 20 % et 40 % en poids, ladite humidification se produisant à une température inférieure au point d'ébullition de l'eau et à pression atmosphérique, et la torréfaction desdits grains de café humidifiés à pression atmosphérique, ***caractérisé en ce que*** ladite humidification et ladite torréfaction sont effectuées dans un même réceptacle (7 ; 9 ; 9a) d'un torréfacteur (1c ; 1d ; 1e).

2. Procédé selon la revendication 1, dans lequel ladite humidification se produit à une température comprise, de manière préférée, entre 60°C et 90°C.

3. Procédé selon la revendication 1 ou 2, dans lequel ladite humidification est prolongée pendant une durée comprise, de manière préférée, entre 30 et 60 minutes.

4. Procédé selon l'une quelconque des revendications précédentes, dans lequel ladite humidification comprend le mélange desdits grains de café avec de l'eau.

5. Procédé selon l'une quelconque des revendications précédentes, dans lequel ladite humidification comprend la soumission desdits grains de café à des jets d'eau.

6. Procédé selon l'une quelconque des revendications 1 à 3, dans lequel ladite humidification comprend la soumission desdits grains de café à des courants d'air humide.

7. Procédé selon l'une quelconque des revendications précédentes, dans lequel ladite humidification provoque une augmentation allant jusqu'à approximativement 100 % du volume desdits grains.

8. Dispositif (1c ; 1d ; 1e) pour la torréfaction de grains de café, comprenant un réceptacle (7 ; 9 ; 9a) destiné à recevoir lesdits grains de café, des moyens de chauffage pour chauffer lesdits grains de café jusqu'à une température de torréfaction et maintenir ladite température de torréfaction pendant un temps prédéterminé, des moyens d'humidification (3) pour humidifier lesdits grains de café, ***caractérisé en ce que*** ledit réceptacle (7 ; 9 ; 9a) est pourvu d'un fond (8 ; 10a ; 11a) pourvu de passages aptes à permettre à un fluide de passer de l'extérieur à l'intérieur dudit réceptacle (7 ; 9 ; 9a), lesdits moyens d'humidification (3) comprennent au moins un gicleur ou un diffuseur (3) apte à créer un jet d'eau ou un flux d'air humide dirigé vers l'intérieur dudit réceptacle (7 ; 9 ; 9a), ledit jet d'eau ou ledit flux d'air humide est délivré à travers ledit fond (8 ; 10a ; 11a), lesdits moyens de chauffage sont prévus pour produire un flux de gaz chauds et délivrer lesdits gaz chauds par lesdits passages, au moins un gicleur ou diffuseur supplémentaire (3b, 3c, 3d) apte à créer un jet d'eau ou un flux d'air humide peut être placé à l'intérieur dudit réceptacle (7 ; 9 ; 9a) en supplément ou comme alternative audit au moins un gicleur ou diffuseur (3), et ledit dispositif est choisi dans un groupe se composant de : un dispositif (1c) à lit fluide, un dispositif (1d) à lit fluide de type "lit jaillissant" symétrique, un dispositif (1e) à lit fluide de type "lit jaillissant" asymétrique.
